# EUROPÄISCHE PATENTSCHRIFT

(11) **EP 1 038 212 B1**
(45) Veröffentlichungstag und Bekanntmachung des Hinweises auf die Patenterteilung: **20.02.2002**
(21) Anmeldenummer: 98963554.5
(22) Anmeldetag: 10.12.1998
(51) Int. Cl.: G06F 1/32

(54) **ELEKTRONISCHE SCHALTUNGSANDORDNUNG ZUM BEAUFSCHLAGEN EINES MIKROPROZESSORS MIT WECK- UND AKTIONSSIGNALEN**
ELECTRONIC CIRCUIT FOR ACTUATING A MICROPROCESSOR WITH PROMPTING AND ACTION SIGNALS
CIRCUITERIE ELECTRONIQUE POUR APPLIQUER DES SIGNAUX D'ACTIVATION ET D'ACTION A UN MICROPROCESSEUR

(30) Priorität: 12.12.1997 DE 19755259
(43) Veröffentlichungstag der Anmeldung: 27.09.2000
(73) Patentinhaber: Leopold Kostal GmbH & Co. KG, 58507 Lüdenscheid (DE)
(72) Erfinder: HUCKFELDT, Olaf, D-58097 Hagen (DE); DELWIG, Jörg, D-58809 Neuenrade (DE); STRATMANN, Volker, D-58239 Schwerte (DE)
(74) Vertreter: Haverkamp, Jens
(86) Internationale Anmeldenummer: EP9808052
(87) Internationale Veröffentlichungsnummer: WO9931568

(56) Entgegenhaltungen:
- EP-A- 0 437 400
- WO-A-95/18998
- US-A- 5 051 622
- BROUSSAS C: "LES MICROCONTROLEURS PIC 16CXX DE MICROCHIP (3)" ELECTRONIQUE RADIO PLANS, Nr. 554, 1. Januar 1994, Seiten 31-35, XP000424282
- PATENT ABSTRACTS OF JAPAN vol. 006, no. 166 (P-138), 31. August 1982 & JP 57 081630 A (TOSHIBA CORP), 21. Mai 1982

## Beschreibung

Die Erfindung bezieht sich auf das Gebiet von elektronischen Schaltungsanordnungen, mit denen Mikroprozessoren mit Weck- und Aktionssignalen beaufschlagt werden.

Es ist bekannt, daß Mikroprozessoren zur Steuerung verschiedenster Aktoren verwendet werden. Insbesondere werden Mikroprozessoren auch im Kraftfahrzeugbereich für Steuerungszwecke eingesetzt, die auch bei abgeschaltetem Motor funktionstüchtig sein müssen. Ein solches Steuergerät ist beispielsweise ein Türsteuergerät. Damit die Belastung der Kraftfahrzeugbatterie durch derartige Mikroprozessor enthaltende Steuergeräte reduziert wird, ist vorgeschlagen worden, den Mikroprozessor zwischen einem Ruhemodus und einem Arbeitsmodus toggeln zu lassen. Dies kann durch Verwendung einer entsprechenden Überwachungseinrichtung - eines sogenannten Watchdogs - herbeigeführt werden. Es ist verständlich, daß in denjenigen Zeitabschnitten, in denen sich der Mikroprozessor im Ruhemodus befindet, ein sehr viel geringer Strom verbraucht wird als in denjenigen Zeitabschnitten, in denen sich der Mikroprozessor im Arbeitsmodus befindet. Schaltungstechnisch bedingt fließen jedoch in der eingangsseitig dem Mikroprozessor vorgeschalteten Schaltungsanordnung ungenutzte Querströme, die auch im Ruhemodus die Batterie belasten.

Befindet sich der Mikroprozessor im Arbeitsmodus, werden von diesem die entsprechenden Eingänge, an denen Aktionssignale anliegen können, abgefragt. Liegt kein Aktionssignal an einem dieser Eingänge an, schaltet der Mikroprozessor wieder in den Ruhemodus. Folglich kann ein Aktionssignal den Mikroprozessor nur dann zur gewünschten Aktion veranlassen, wenn sich dieser zufällig im Arbeitsmodus befindet. Damit die gewünschte Steuerung nicht erst nach unnötigem Zuwarten nach Erzeugen eines Aktionssignales von einem Benutzer erfolgt, muß der Toggelbetrieb zwischen dem Ruhemodus und dem Arbeitsmodus des Mikroprozessors so ausgelegt sein, daß etwa alle 80 bis 100 ms ein Moduswechsel herbeigeführt wird. Verzögerungen von mehr als 100 ms können von einem Benutzer erfaßt und als unangenehm empfunden werden. Bei der Einstellung einer solchen Schaltungsanordnung ist ebenfalls die notwendige Einschwingdauer des Taktgebers des Mikroprozessors zu berücksichtigen, welches Einschwingen üblicherweise eine Zeitspanne zwischen 5 ms und 20 ms einnimmt.

Dieser Toggelbetrieb führt zwar zu einer Stromersparnis gegenüber solchen Schaltungsanordnungen, die nicht zwischen einem Ruhemodus und einem Arbeitsmodus toggeln, jedoch wird der Mikroprozessor sehr häufig in den Arbeitsmodus gebracht, ohne daß tatsächlich eine Steueraktion auszuführen wäre.

In den Dokumenten EP-A-0 437 400 und US-A-5 051 622 werden Einrichtungen beschrieben, die einen vorhandenen Eingang (RESET-Eingang) eines Mikroprozessors ausnutzen, um den Mikroprozessor mit einem zusätzlichen Signal zu beaufschlagen. In Dokument PAJ Vol. 006, No. 166 (P-138), 31 August 1982 wird auf die Problematik der Stromersparnis bei der Pufferung von einem Signal, das zwischen zwei Schaltungsanordnungen ausgetauscht wird, eingegangen.

Ausgehend von diesem diskutierten Stand der Technik liegt der Erfindung daher die Aufgabe zugrunde, eine elektronische Schaltungsanordnung zur Beaufschlagung eines Mikroprozessors mit Weck- und Aktionssignalen bereitzustellen, mit der eine gegenüber dem aufgezeigten Stand der Technik weitere Stromersparnis möglich ist.

Diese Aufgabe wird erfindungsgemäß durch eine elektronische Schaltungsanordnung zum Beaufschlagen eines Mikroprozessors mit Weckund Aktionssignalen umfassend zumindest einen der Schaltungsanordnung zugeordneten externen Schalter zum Erzeugen des oder der Signale, welche Schaltungsanordnung einen Ruhemodusschaltkreis zum Generieren eines einen Wake-up-Interrupt auslösenden Wecksignales, wenn der Mikroprozessor von einem Ruhemodus in einen Arbeitsmodus gebracht werden soll, und einen Arbeitsmodusschaltkreis zum Generieren von Aktionssignalen aufweist, wobei der Ruhemodusschaltkreis an einem weckfähigen Digitaleingang und der Arbeitsmodusschaltkreis an einem Analogeingang des Mikroprozessors anliegen und wobei beiden Schaltkreisen der zumindest eine externe Schalter zugeordnet ist, welche Schaltungsanordnung Schaltmittel aufweist, mit denen die Schaltungsanordnung in Abhängigkeit von dem Betriebsmodus des Mikroprozessors (Ruhemodus oder Arbeitsmodus) zwischen einem Betrieb des Ruhemodusschaltkreises und des Arbeitsmodusschaltkreises bei Abschaltung des jeweilig anderen Schaltkreises schaltbar ist, wobei der weckfähige Eingang des Mikroprozessors unter Verwendung einer vorbestimmten Schwellspannung oder eines Schwellspannungsintervalls dergestalt konfiguriert ist, daß dieser einen Wake-up-Interrupt erzeugt, wenn das Wecksignal einem der logischen Operatoren 0 oder 1 entspricht, wobei der logische Operator 0 einer Spannung kleiner einer Schwellspannung und der logische Operator 1 einer Spannung größer einer Schwellspannung entspricht, gelöst.

Mit der erfindungsgemäßen Schaltungsanordnung wird an dem weckfähigen Digitaleingang des Mikroprozessors nur dann ein Wake-up-Interrupt generiert, wenn tatsächlich Funktionen von dem Mikroprozessor übernommen oder ausgeführt werden sollen. Entsprechend erfolgt ein Stromverbrauch nur dann, wenn tatsächlich die Betriebsbereitschaft des Mikroprozessors benötigt wird. Zur Vermeidung eines Fließens von unerwünschten Querströmen im Ruhemodus sieht die Schaltungsanordnung einen Ruhemodusschaltkreis und einen Arbeitsmodusschaltkreis vor, wobei im Ruhemodus ein Stromfluß im Arbeitsmodusschaltkreis durch Anordnen geeigneter Schaltmittel unterbrochen ist. Folglich fließen keine Querströme. Umgekehrt ist im Arbeitsmodus der Ruhemodusschaltkreis unterbrochen.

Darüber hinaus macht sich die Erfindung zu Nutze, daß der weckfähige Eingang des Mikroprozessors dergestalt konfigurierbar ist, daß ein Wake-up-Interrupt in Abhängigkeit von der vorgenommenen Konfiguration erzeugt werden kann, wenn nämlich das Wecksignal einem der logischen Operatoren 0 oder 1 entspricht. Zu diesem Zweck ist der weckfähige Eingang des Mikroprozessors zweckmäßigerweise dergestalt konfiguriert, daß vorbestimmte Schwellspannungen die logischen Operatoren voneinander trennen, wobei der logische Operator 0 einer Spannung kleiner der unteren Schwellspannung und der logische Operator 1 einer Spannung größer der oberen Schwellspannung entsprechen. Es kann jedoch auch vorgesehen sein, anstelle des beschriebenen Schwellspannungsintervalls mit einer unteren Schwellspannung und einer oberen Schwellspannung eine einzige Schwellspannung zu definieren, die zur Trennung des logischen Operators 0 und des logischen Operators 1 vorgesehen ist. Im Ruhemodus liegt an dem weckfähigen Eingang sodann eine Spannung an, die keinen Wake-up-Interrupt erzeugt. Erst wenn durch Betätigung des externen Schalters über den Mikroprozessor eine Aktion ausgelöst oder gesteuert werden soll, erfolgt je nach Konfiguration des Mikroprozessoreinganges ein entsprechender Spannungsanstieg oder ein entsprechender Spannungsabfall als Trigger, damit durch die nunmehr geänderte anliegende Spannung der gewünschte Wake-up-Interrupt herbeigeführt wird.

In einer besonders zweckmäßigen Ausführungsform ist vorgesehen, daß der Wake-up-Interrupt dann erzeugt wird, wenn an dem weckfähigen Mikroprozessoreingang der logische Operator 0 anliegt und somit der Wake-up-Interrupt durch einen an diesem Eingang anliegenden Spannungsabfall erzeugt wird. Ein solcher Spannungsabfall läßt sich beispielsweise dadurch realisieren, daß dem Ruhemodusschaltkreis ein Pull-up-Widerstand zugeordnet ist, der über ein Schaltmittel an einen Stromversorgungsregler angeschlossen ist. Entsprechend liegt an dem weckfähigen Eingang des Mikroprozessors die von dem Spannungsregler zur Verfügung gestellte Spannung an. Über eine Steuerleitung ist der externe Schalter ebenfalls mit dem weckfähigen Eingang des Mikroprozessors verbunden. In dieser Steuerleitung ist ein Widerstand eingeschaltet, so daß dieser mit dem Pull-up-Widerstand und der an dem weckfähigen Eingang des Mikroprozessors anliegenden Steuerleitung ein Spannungsteiler gebildet ist. Eine Schalterbetätigung schließt nunmehr den Ruhemodusschaltkreis, so daß durch den Pull-up-Widerstand und den in der Steuerleitung angeordneten Widerstand der Spannungsteiler wirksam ist, so daß im Mikroprozessoreingang ein Spannungsabfall unter die Schwellspannung erfolgt. Dies triggert als logischer Operator 0 den Wake-up-Interrupt des Mikroprozessors.

Ist der Taktgeber des Mikroprozessors eingeschwungen und stabil, wird das dem Pull-up-Widerstand zugeordnete Schaltmittel geöffnet und das bzw. die zur Abschaltung des Arbeitsmodusschaltkreises vorgesehenen Schaltmittel geschlossen. Die durch das Geschlossenbleiben des externen Schaltmittels oder auch durch erneutes oder weiteres Betätigen desselben erzeugten Aktionssignale beaufschlagen den Analogeingang des Mikroprozessors, der aufgrund des nunmehr zur Verfügung stehenden AD-Wandlers funktionsfähig ist.

Bevorzugt ist eine Schaltungsanordnung, bei der Teile sowohl für den Betrieb des Ruhemodusschaltkreises als auch für denjenigen des Arbeitsmodusschaltkreises vorgesehen sind. Zweckmäßigerweise verfügen beide Schaltkreise über eine gemeinsame, die zusammengeschalteten Eingänge des Mikroprozessors beaufschlagende Steuerleitung, in die auch der externe Schalter eingebunden ist. Diese Ausgestaltungen führen sowohl zu einer schaltungstechnischen Platzersparnis als auch zu einem minimalen Einsatz an Bauelementen. Überdies werden für eine solche Schaltungsanordnung nur elektronische Bauelemente der einfachsten Art benötigt.

Weitere Vorteile und Ausgestaltungen der Erfindung sind Bestandteil der übrigen Unteransprüche sowie der nachfolgenden Beschreibung eines Ausführungsbeispieles. Es zeigen:
- **Fig. 1:**: Eine elektronische Schaltungsanordnung zum Beaufschlagen eines Mikroprozessors mit Weck- und Aktionssignalen umfassend einen Ruhemodusschaltkreis und einen Arbeitsmodusschaltkreis,
- **Fig. 2:**: der Ruhemodusschaltkreis der Schaltungsanordnung der Figur 1 und
- **Fig. 3:**: der Arbeitsmodusschaltkreis der Schaltungsanordnung der Figur 1.

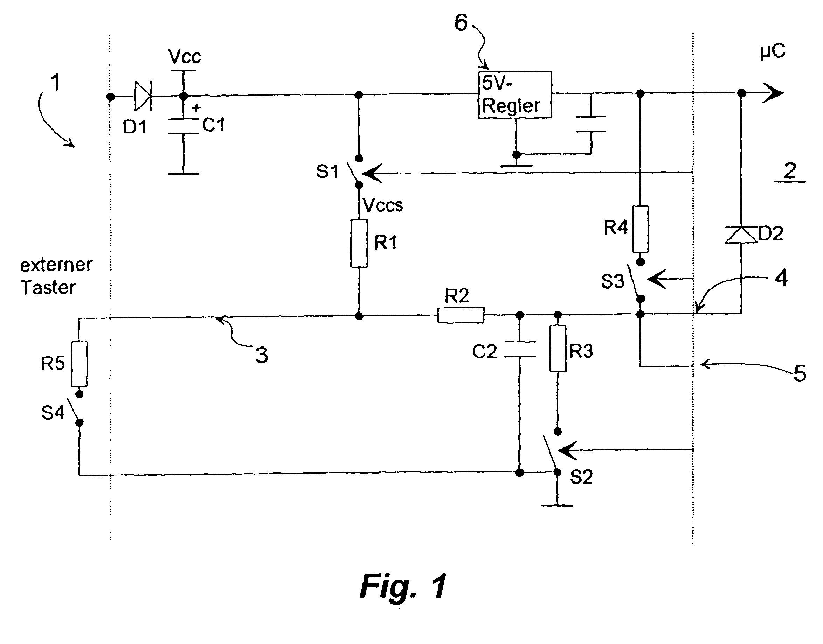

Die in Figur 1 gezeigte Schaltungsanordnung 1 dient zum Generieren von Weck- und Aktionssignalen zur Steuerung eines nicht näher dargestellten Mikroprozessors 2. Der Schaltungsanordnung 1 ist ferner ein externer Schalter S4 zugeordnet, durch den sowohl das Wecksignal als auch ein oder mehrere Aktionssignale ausgelöst werden können. Der externe Schalter S4 ist als Taster ausgebildet, der über eine Steuerleitung 3 sowohl mit dem wake-up-fähigen Digitaleingang 4 als auch mit dem Analogeingang 5 des Mikroprozessors 2 verbunden ist. Der Digitaleingang 4 und der Analogeingang 5 sind in dem dargestellten Ausführungsbeispiel zusammengeschaltet. Ein solcher Stromfluß ist auch nicht zur Ruhebestromung bestimmter elektronischer Bauelemente notwendig. In der Steuerleitung 3 ist ein Widerstand R2 angeordnet. Die Schaltungsanordnung 1 umfaßt femer einer Pull-up-Widerstand R4, der an den Ausgang eines Spannungsreglers 6 angeschlossen ist. Mit Hilfe eines Schaltmittels S3 ist der Pull-up-Widerstand R4 mit der Steuerleitung 3 verbindbar.

Da Mikroprozessoren oftmals über einen solchen Pull-up-Widerstand verfügen, der über ein Schaltmittel mit einem entsprechenden Mikroprozessoreingang verbindbar ist, können diese oftmals in einem Mikroprozessor ungenutzten Bauelemente für den erfindungsgemäßen Zweck verwendet werden. Ferner kann vorgesehen sein, daß ebenfalls das Schaltmittel S2 in dem Mikroprozessor 2 integriert ist. Durch solche Maßnahmen ist der Aufwand der verbleibenden Schaltungsanordnung entsprechend geringer.

Der Taster S4 ist ferner über einen weiteren Widerstand R1, der mittels eines weiteren Schaltmittels S1 zugeschaltet werden kann, bestrombar.

Bei dem in den Figuren dargestellten Ausführungsbeispiel ist der Taster S4 durch einen Widerstand R5 analog codiert. Damit im Ruhemodus der Schaltungsanordnung 1 bei ausgeschaltetem Arbeitsmodusschaltkreis keine Querströme fließen, ist ein weiteres Schaltmittel S2 vorgesehen. Für den Fall, daß anstelle des Tasters S4 ein nicht analog codiertes Eingangssignal bereitgestellt wird, kann das Schaltmittel S2 sowie der diesem zugeordnete Widerstand R3 entfallen.

Die in der Schaltungsanordnung 1 verwendeten Schaltmittel S1, S2, S3 werden mikroprozessorgesteuert in die eine oder andere Schaltstellung gebracht. Als Schaltmittel S1, S2, S3 werden bevorzugt Transistoren eingesetzt.

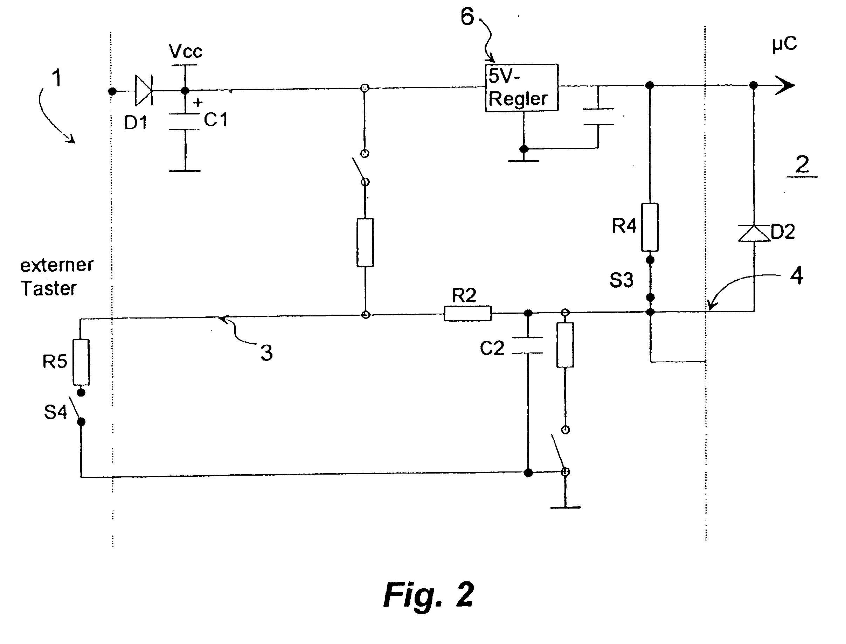

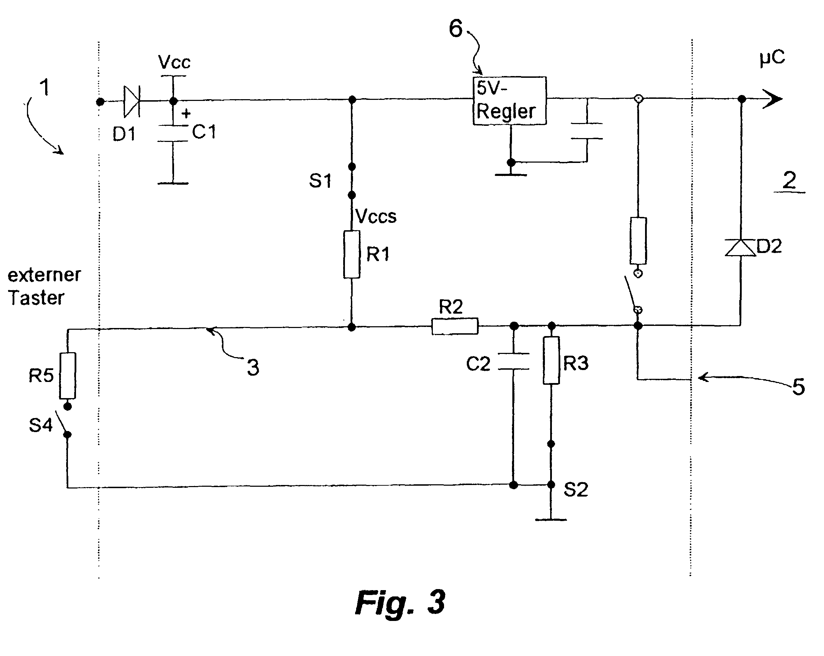

Für die Darstellung der Funktionsweise der Schaltungsanordnung 1 sei auf die Figuren 2 und 3 verwiesen. Figur 2 zeigt die im Ruhemodus aktiven Schaltungselemente der Schaltungsanordnung 1 - den Ruhemodusschaltkreis. Diese Konfiguration wird dadurch erreicht, daß bevor der Mikroprozessor 2 von seinem Arbeitsmodus in den Ruhemodus übergeht, die Schaltmittel S1 und S2 geöffnet und das Schaltmittel S3 geschlossen wird. Aus der Schaltungsdarstellung der Figur 2 wird nun ersichtlich, daß bedingt durch die geöffneten Schalter S1, S2 keine Querströme von einer Stromquelle zur Masse hin fließen können. Durch Schließen des Schaltmittels S3 wird über den Pull-up-Widerstand R4 der Digitaleingang 4 des Mikroprozessors 2 mit der von dem Spannungsregler 6 zur Verfügung gestellten Spannung beaufschlagt. Bei einem Spannungsregler, der 5 V zur Verfügung stellt, liegen demnach an dem Digitaleingang 4, 5 V an. Da der Digitaleingang 4 mit einer unteren Schwellspannung von 1,5 V konfiguriert ist, wobei ein Wake-up-Interrupt nur bei Spannungen kleiner 1,5 V herbeigeführt wird, verbleibt der Mikroprozessor 2 in dem Ruhemodus. Die gleichermaßen am mit dem Digitaleingang 4 zusammengeschalteten Analogeingang 5 anliegende Spannung führt, da der AD-Wandler des Mikroprozessors 2 im Ruhemodus nicht aktiv ist, zu keiner Reaktion des Mikroprozessors 2.

Die Bestromung des Tasters S4 erfolgt über den Widerstand R4, das Schaltmittel S3 und die Widerstände R2 und R5. Der Taster S4 wird ebenfalls mit der Spannung des Spannungsreglers 6, die auch an dem Digitaleingang 4 des Mikroprozessors 2 anliegt, bestromt. Daher kommt es auch durch die in dem Mikroprozessor 2 eingesetzte Diode D2 nicht zu unerwünschten Querströmen.

Zum Generieren eines Wake-up-Interrupts des Mikroprozessors 2 wird der Taster S4 betätigt (= geschlossen). Durch Schließen des Tasters S4 wird ein Stromfluß zur Masse hergestellt, so daß durch die Widerstände R4 und R2 zusammen mit dem für die Analogcodierung des Tasters S4 vorgesehenen Widerstand R5 ein aktiver Spannungsteiler gebildet ist. Folglich ist an dem Digitaleingang 4 des Mikroprozessors 2 ein Spannungsabfall feststellbar, der aufgrund der Dimensionierung der Widerstände R4, R2 und R5 so bemessen ist, daß dieser unter der Schwellspannung von 1,5 V liegt. Dieses Signal ist das Wecksignal und stellt den logischen Operator 0 dar, so daß nunmehr ein Wake-up-Interrupt des Mikroprozessors 2 herbeigeführt wird.

Ist der Mikroprozessor 2 betriebsbereit, wird das Schaltmittel S3 geöffnet und die Schaltmittel S1 und S2 geschlossen. Diese den Arbeitsmodus bzw. den Arbeitsmodusschaltkreis der Schaltungsanordnung 1 darstellende Situation ist in Figur 3 gezeigt. Im Arbeitsmodus ist der Taster S4 über den Arbeitsmodusschaltkreis und somit über den Widerstand R1 und den geschlossenen Schalter S1 bestromt. Da auch das Schaltmittel S2 geschlossen ist, sind die Widerstände R2 und R3 als Spannungsteiler für den Analogeingang 5 des Mikroprozessors 2 verschaltet. Tasterbetätigungen werden dann mittels des analogen Einganges eingelesen und ausgewertet. Ist die gewünschte Steuerung oder Aktion von dem Mikroprozessor 2 ausgeführt, schaltet dieser wieder in den Ruhemodus.

Es kann vorgesehen sein, im Ruhemodus das Schaltmittel S1 zyklisch zu schließen. Durch diese Maßnahme wird der Taster S4 zyklisch über den Widerstand R1 an die Betriebsspannung gelegt, was bei einer üblichen Dimensionierung der Widerstände R1 und R4, wobei R1 wesentlich kleiner als R4 ist, einen höheren Tasterstrom im Betätigungsfall bewirkt. Entsprechend können auch parasitäre Widerstände etwa durch Feuchtigkeit im Stecker niederohmig im Ruhemodus zyklisch an die Betriebsspannung gelegt werden.

Aus der Beschreibung der Erfindung wird deutlich, daß die beschriebene Schaltungsanordnung, insbesondere durch eine Verwendung von Spannungsteilern, nicht nur sehr einfach in ihrem Aufbau ist, sondern daß im Ruhemodus die Schaltungsanordnung 1 querstromfrei ist. Durch diese Maßnahmen wird eine Spannungsquelle, etwa eine Kraftfahrzeugbatterie tatsächlich nur dann belastet, wenn die Funktionsbereitschaft des Mikroprozessors 2 benötigt wird. Eine solche mikroprozessorgesteuerte Aktion erfolgt unmittelbar nach einem Einschwingen des Taktgebers und Auswerten des Aktionssignales, so daß die gewünschte Aktion für einen Benutzer ohne eine erfaßbare Verzögerung stattfindet.

### Zusammenstellung der Bezugszeichen

- 1: Schaltungsanordnung
- 2: Mikroprozessor
- 3: Steuerleitung
- 4: Digitaleingang
- 5: Analogeingang
- 6: Spannungsregler

- R1: Widerstand
- R2: Widerstand
- R3: Widerstand
- R4: Pull-up-Widerstand
- R5: Widerstand zur Analogcodierung

- S1: Schaltmittel
- S2: Schaltmittel
- S3: Schaltmittel
- S4: externer Schalter / Taster

## Patentansprüche

1. Elektronische Schaltungsanordnung zum Beaufschlagen eines Mikroprozessors (2) mit Weck- und Aktionssignalen umfassend zumindest einen der Schaltungsanordnung (1) zugeordneten externen Schalter (S4) zum Erzeugen des oder der Signale, welche Schaltungsanordnung (1) einen Ruhemodusschaltkreis zum Generieren eines einen Wake-up-Interrupt auslösenden Wecksignales, wenn der Mikroprozessor (2) von einem Ruhemodus in einen Arbeitsmodus gebracht werden soll, und einen Arbeitsmodusschaltkreis zum Generieren von Aktionssignalen aufweist, wobei der Ruhemodusschaltkreis an einem weckfähigen Digitaleingang (4) und der Arbeitsmodusschaltkreis an einem Analogeingang (5) des Mikroprozessors (2) anliegen und wobei beiden Schaltkreisen der zumindest eine externe Schalter (S4) zugeordnet ist, welche Schaltungsanordnung (1) Schaltmittel (S1, S2, S3) aufweist, mit denen die Schaltungsanordnung (1) in Abhängigkeit von dem Betriebsmodus des Mikroprozessors (2) zwischen einem Betrieb des Ruhemodusschaltkreises und des Arbeitsmodusschaltkreises bei Abschaltung des jeweilig anderen Schaltkreises schaltbar ist, wobei der weckfähige Eingang (4) des Mikroprozessors (2) unter Verwendung einer vorbestimmten Schwellspannung oder eines Schwellspannungsintervalls dergestalt konfiguriert ist, daß dieser einen Wake-up-Interrupt erzeugt, wenn das Wecksignal einem der logischen Operatoren 0 oder 1 entspricht, wobei der logische Operator 0 einer Spannung kleiner einer Schwellspannung und der logische Operator 1 einer Spannung größer einer Schwellspannung entsprechen.

2. Schaltungsanordnung nach Anspruch 1, **dadurch gekennzeichnet, daß** Teile der Schaltungsanordnung (1) sowohl für den Betrieb des Ruhemodusschaltkreises sowie für denjenigen des Arbeitsmodusschaltkreises vorgesehen sind.

3. Schaltungsanordnung nach Anspruch 2, **dadurch gekennzeichnet, daß** der Ruhemodusschaltkreis und der Arbeitsmodusschaltkreis über eine gemeinsame, den Mikroprozessor (2) beaufschlagende Steuerleitung (3) zur Verbindung des externen Schalters (S4) mit den zusammengeschalteten Digital- und Analogeingang (4, 5) des Mikroprozessors (2) verfügen.

4. Schaltungsanordnung nach einem der Ansprüche 1 bis 3, **dadurch gekennzeichnet, daß** der weckfähige Eingang (4) des Mikroprozessors (2) so konfiguriert ist, daß ein Wake-up-Interrupt generiert wird, wenn das Wecksignal dem logischen Operator 0 entspricht und daß dem Ruhemodusschaltkreis ein Pull-up-Widerstand (R4) zugeordnet ist, der über ein Schaltmittel (S3) an einen Stromversorgungsregler (6) angeschlossen ist, so daß beim Betätigen des externen Schalters (S4) zum Generieren des Wecksignales an dem Digitaleingang (4) des Mikroprozessors (2) ein Spannungsabfall unterhalb einer die logischen Operatoren 0 und 1 trennende Schwellspannung eintritt.

5. Schaltungsanordnung nach Anspruch 4, **dadurch gekennzeichnet, daß** der Ruhemodusschaltkreis einen mit seinem einen Ast am weckfähigen Eingang (4) des Mikroprozessors (2) angeschlossenen, einen Spannungsteiler darstellenden Teilschaltkreis umfaßt, der durch Betätigen des externen Schalters (S4) schließbar ist.

6. Schaltungsanordung nach Anspruch 4, **dadurch gekennzeichnet, daß** die untere Schwellspannung größer 0 V und kleiner oder gleich 1,5 V ist.

7. Schaltungsanordnung nach Anspruch 4 oder 5, **dadurch gekennzeichnet, daß** der Pull-up-Widerstand (R4) mit dem ihm zugeordneten Schaltmittel (S3) Teil des Mikroprozessors (2) ist.

8. Schaltungsanordnung nach Anspruch 4, 5 oder 7, **dadurch gekennzeichnet, daß** das Schaltmittel (S2) Teil des Mikroprozessors (2) ist.

9. Schaltungsanordnung nach einem oder mehreren der Ansprüche 1 bis 8, **dadurch gekennzeichnet, daß** die in der Schaltungsanordnung (1) verwendeten Schaltmittel Transistoren sind.

## Claims

1. Electronic circuit arrangement for actuating a microprocessor (2) with wake-up and action signals, said arrangement including at least one external switch (S4), which is associated with the circuit arrangement (1), for generating the signal or signals, which circuit arrangement (1) has an inoperative mode switching circuit for generating a wake-up signal, which triggers a wake-up interrupt, when the microprocessor (2) is to be brought from an inoperative mode to an operative mode, and which circuit arrangement has an operative mode switching circuit for generating action signals, wherein the inoperative mode switching circuit is applied to a wakeable digital input (4), and the operative mode switching circuit is applied to an analog input (5) of the microprocessor (2), and wherein the at least one external switch (S4) is associated with both switching circuits, which circuit arrangement (1) has switching means (S1, S2, S3) whereby the circuit arrangement (1) is switchable between an operation of the inoperative mode switching circuit and the operative mode switching circuit in dependence on the operational mode of the microprocessor (2) when the other respective switching circuit is switched-off, wherein, by using a predetermined threshold voltage or a threshold voltage interval, the wakeable input (4) of the microprocessor (2) is configured in such a manner that said input generates a wake-up interrupt when the wake-up signal corresponds to one of the logical operators 0 or 1, the logical operator 0 corresponding to a voltage less than a threshold voltage, and the logical operator 1 corresponding to a voltage greater than a threshold voltage.

2. Circuit arrangement according to claim 1, **characterised in that** parts of the circuit arrangement (1) are provided both for the operation of the inoperative mode switching circuit and for the operation of the operative mode switching circuit.

3. Circuit arrangement according to claim 2, **characterised in that** the inoperative mode switching circuit and the operative mode switching circuit have a common control line (3), which actuates the microprocessor (2), for connecting the external switch (S4) to the interconnected digital and analog inputs (4, 5) of the microprocessor (2).

4. Circuit arrangement according to one of claims 1 to 3, **characterised in that** the wakeable input (4) of the microprocessor (2) is so configured that a wake-up interrupt is generated when the wake-up signal corresponds to the logical operator 0, and **in that** a pull-up resistor (R4) is associated with the inoperative mode switching circuit and communicates with a power supply regulator (6) via a switching means (S3) so that, when the external switch (S4) is actuated to generate the wake-up signal at the digital input (4) of the microprocessor (2), the voltage drops below a threshold voltage separating the logical operators 0 and 1.

5. Circuit arrangement according to claim 4, **characterised in that** the inoperative mode switching circuit includes a partial switching circuit which communicates with the wakeable input (4) of the microprocessor (2) with its one branch and represents a voltage divider, which partial switching circuit is closable by actuating the external switch (S4).

6. Circuit arrangement according to claim 4, **characterised in that** the lower threshold voltage is greater than 0 V and less than or equal to 1.5 V.

7. Circuit arrangement according to claim 4 or 5, **characterised in that** the pull-up resistor (R4), having the switching means (S3) associated therewith, is part of the microprocessor (2).

8. Circuit arrangement according to claim 4, 5 or 7, **characterised in that** the switching means (S2) is part of the microprocessor (2).

9. Circuit arrangement according to one or more of claims 1 to 8, **characterised in that** the switching means, used in the circuit arrangement (1), are transistors.

## Revendications

1. Circuiterie électronique pour appliquer des signaux d'activation et d'action à un microprocesseur (2), comprenant au moins un contacteur externe (S4) à la circuiterie électronique (1) destinée à produire le ou les signaux, laquelle circuiterie électronique (1) comportera d'une part un circuit de mode de repos destiné à générer un signal d'activation déclenchant une interruption de réveil lorsque le microprocesseur (2) doit basculer du mode de repos au le mode de travail, et d'autre part un circuit de mode de travail destiné à générer des signaux d'action, le circuit de mode de repos étant raccordé à une entrée numérique activable (4) et le circuit de mode de travail à une entrée analogique (5) du microprocesseur (2), chacun de ces deux circuits étant par ailleurs associé à un contacteur externe (S4), laquelle circuiterie électronique (1) comporte des organes de commutation (S1, S2, S3) à l'aide desquels elle peut être commuté pour assurer le fonctionnement du circuit de mode de repos ou le fonctionnement du circuit de mode de travail par mise hors fonction de l'autre circuit, ceci selon le mode de fonctionnement du processeur (2), l'entrée activable (4) du microprocesseur (2) étant configurée par recours à une tension seuil prédéterminée ou à une fourchette de tension seuil qui générera une interruption de réveil lorsque le signal d'activation correspond à l'un des opérateurs logiques 0 ou 1, sachant que l'opérateur logique 0 correspond à une tension inférieure à la tension de seuil et l'opérateur logique 1 à une tension supérieure à la tension de seuil.

2. Circuiterie électronique selon la revendication 1, **caractérisée en ce que** des éléments de la circuiterie électronique (1) sont prévus indifféremment au fonctionnement du circuit de mode de repos que du circuit de mode de travail.

3. Circuiterie électronique selon la revendication 2, **caractérisée en ce que** le circuit de mode de repos et le circuit de mode de travail disposent d'une ligne de commande (3) commune raccordée au microprocesseur (2) et assurant la liaison entre le bouton poussoir externe (S4) et les entrées numérique et analogique (4, 5) du microprocesseur (2) reliées à un même point commun.

4. Circuiterie électronique selon l'une des revendications 1 à 3, **caractérisée en ce que** l'entrée d'activation (4) du microprocesseur (2) est configurée de manière à ce qu'une interruption de réveil est générée lorsque le signal de réveil correspond à l'opérateur logique 0 et **en ce que** le circuit de mode de repos se voit associer une résistance d'excursion haute (R4) reliée à un régulateur de tension (6) par l'intermédiaire d'un organe de commutation (S3) afin qu'une action sur le contacteur externe (S4) provoque pour générer le signal de réveil à l'entrée numérique (4) du microprocesseur (2) une chute de tension au-dessous d'une tension seuil séparant les opérateurs logiques 0 et 1.

5. Circuiterie électronique selon la revendication 4, **caractérisé en ce que** le circuit de mode de repos comporte un circuit partiel relié par l'une de ses branches à l'entrée d'activation (4) du microprocesseur (2), constituant un diviseur de tension et pouvant être refermé par action sur le contacteur externe (S4).

6. Circuiterie électronique selon la revendication 4, **caractérisée en ce que** la tension seuil inférieure est supérieure à 0 V et inférieure ou égale à 1,5 V.

7. Circuiterie électronique selon l'une des revendications 4 ou 5, **caractérisée en ce que** la résistance d'excursion haute (R4) constitue, avec l'organe de commutation (S3) associé, une partie du microprocesseur (2).

8. Circuiterie électronique selon l'une des revendications 4, 5 ou 7, **caractérisée en ce que** l'organe de commutation (S2) constitue une partie du microprocesseur (2).

9. Circuiterie électronique selon une ou plusieurs des revendications 1 à 8, **caractérisée en ce que** les organes de commutation utilisés dans la circuiterie électronique (1) soient des transistors.
